# EUROPEAN PATENT APPLICATION

(11) **EP 4 834 640 A1**
(43) Date of publication of application: **04.11.2026**
(21) Application number: 25174109.6
(22) Date of filing: 02.05.2025
(51) Int. Cl.: B60L 1/00, B60H 1/00, B60L 53/60, B60L 58/26

(54) **OPERATING MODES FOR ELECTRIC VEHICLES**

(71) Applicant: Ford Global Technologies, LLC, Dearborn, MI 48126 (US)
(72) Inventor: ROWLAND, Mike, Wickham Bishops, CM8 3LY (GB); MAXWELL, Gareth, Bishop's Stortford, CM23 2BX (GB); MENDEL, Marc, Alexander, 42781 Haan (DE); METCALFE, Mark, Hutton, CM13 1SJ (GB); SAVILLE, Jon, Chelmsford, CM1 4UR (GB)
(74) Representative: HG Law International LLP

(57) **Abstract**

The present disclosure provides systems and methods for controlling the noise output of an electric vehicle. Systems and methods described herein include detecting, using a location detection arrangement, a location of the electric vehicle, detecting a time of day, and determining whether the electric vehicle is connected to an electric vehicle supply equipment. Systems and methods described herein also include providing a control arrangement configured to control the operation of at least one of a pump, a fan, or a compressor, determining, using a temperature determination arrangement, an ambient temperature around the electric vehicle, determining a desired temperature of at least one of the traction battery or the vehicle compartment, and determining, based on the location of the electric vehicle, the time of day, and whether the electric vehicle is connected to an electric vehicle supply equipment, an exterior noise level limit.

## Description

### FIELD OF INVENTION

The present disclosure relates to noise reduction in electric vehicles, and more particularly to control strategies for moderating exterior radiated noise emissions from parked electric vehicles during battery and cabin heating and cooling operations.

### BACKGROUND

Electric vehicles (EVs) have gained popularity in recent years alongside traditional internal combustion engine vehicles. EVs utilize rechargeable battery packs to power electric motors for propulsion. Such battery packs require thermal management to maintain optimal performance and longevity. Additionally, EV cabins often utilize electric heating and cooling systems rather than engine heat for climate control.

When an EV is parked and not in use, various systems may still operate periodically to condition the battery pack or cabin. For example, battery thermal management systems may activate to warm or cool the battery cells to keep them within an ideal temperature range. Cabin preconditioning systems may also run to adjust interior temperatures before a planned departure time. These conditioning operations can involve the use of pumps, fans, compressors and other components that generate noise.

In residential areas or other noise-sensitive locations, the sound emissions from parked EVs undergoing conditioning cycles could potentially cause disturbances, especially during nighttime hours. As EV adoption increases, the cumulative noise of multiple parked vehicles in a given area may become more noticeable. Current EV designs may not adequately account for minimizing these stationary noise emissions in all situations.

Existing approaches to reduce EV noise typically focus on minimizing interior cabin noise or exterior driving noise. However, the unique scenario of a stationary EV periodically running conditioning systems while parked may present different acoustic challenges.

### SUMMARY

This Summary is provided to introduce a selection of concepts in a simplified form that are further described below in the Detailed Description.

In a first aspect, a method for controlling the noise output of an electric vehicle is provided. The method comprises: detecting, using a location detection arrangement, a location of the electric vehicle; detecting a time of day; determining whether the electric vehicle is connected to an electric vehicle supply equipment; providing a control arrangement configured to control the operation of at least one of a pump, a fan, or a compressor; determining, using a temperature determination arrangement, an ambient temperature around the electric vehicle; determining a desired temperature of at least one of the traction battery or the vehicle compartment; determining, based on the location of the electric vehicle, the time of day, and whether the electric vehicle is connected to an electric vehicle supply equipment, an exterior noise level limit; setting, based on the exterior noise level limit and the desired temperature, a limit for the operation of the at least one of the pump, fan, or compressor; and controlling, using the control arrangement, the operation of the at least one of the pump, fan, or compressor in accordance with the limit. The electric vehicle may be a passenger vehicle, such as a battery electric vehicle (e.g., a passenger car). The electric vehicle may be part of a fleet of electric vehicle, such a battery electric vehicle (e.g., a bus or delivery vehicle). In some cases the noise output may be an aggregated or average noise output across the fleet of electric vehicles.

This method may allow for dynamic control of vehicle noise output based on multiple contextual factors considering noise obligations and vehicle and battery temperature management.

The location detection arrangement may be a GPS sensor.

Utilizing GPS for location detection provides precise positioning information, allowing for accurate application of location-specific noise limits.

The step of detecting the time of day may comprise detecting, using a daylight sensor, whether it is day or night.

Incorporating a daylight sensor enables automatic adjustment of noise limits based on ambient light conditions, which often correlate with time-based noise limits.

The step of detecting the time of day may comprise detecting the time of day by using an external time signal.

Using an external time signal ensures accurate time-based noise limit adjustments, even in situations where daylight sensors may be unreliable.

The method may further comprise, on detecting that the electric vehicle is not connected to an electric vehicle supply equipment, determining a duration for which the vehicle has been stationary.

This feature allows for differentiation between short-term parking and long-term stationary periods, enabling more nuanced noise control strategies.

The method may further comprise, on determining that the vehicle has been stationary for a time period lower than a threshold period, deferring the step of controlling, using the control arrangement, the operation of the at least one of the pump, fan, or compressor in accordance with the limit, until the threshold time period has elapsed.

This deferral mechanism prevents unnecessary noise restrictions during brief stops, whilst maintaining overall system efficiency and user convenience.

The method may further comprise, on determining that the electric vehicle is connected to an electric vehicle supply equipment, modifying the exterior noise level limit.

Adjusting noise limits during charging allows for optimized temperature management while considering the typically stationary nature of charging vehicles.

The method may further comprise, on determining that the electric vehicle is connected to an electric vehicle supply equipment, determining the exterior noise level limit irrespective of the location of the electric vehicle and the time of day.

This feature enables consistent noise management during charging, regardless of external factors, which can be beneficial in dedicated charging areas.

The exterior noise level limit may be set manually by a user.

Allowing manual user input provides flexibility for specific situations or user preferences, enhancing the system's adaptability.

Controlling the operation of the at least one pump, fan, or compressor may comprise controlling the speed thereof.

Speed control of these components offers a direct and effective method for managing noise output while maintaining thermal management capabilities.

The method may further comprise: providing a data reception arrangement; receiving, by way of the data reception arrangement, an instruction to set the exterior noise level limit; and modifying the exterior noise level limit based on the instruction.

This feature enables remote updating of noise limit parameters, allowing for dynamic adjustments based on location-based noise limits and/or environmental conditions.

Providing the control arrangement may comprise providing at least one actuator configured to control the operation of the at least one pump, fan, or compressor.

Utilizing actuators for component control enables precise and responsive adjustments to maintain noise levels within set limits.

The method may further comprise: measuring the noise output of the electric vehicle; determining whether the noise output of the electric vehicle exceeds the exterior noise level limit; and modifying the limit for the operation of the at least one of the pump, fan, or compressor.

Additionally or alternatively, the method may comprise: measuring the noise output of a charger for an electric vehicle; determining whether the noise output of the charger for the electric vehicle exceeds the exterior noise level limit; and modifying the limit for the operation of the at least one of the pump, fan, or compressor of the charger.

This feedback loop ensures continuous observation with noise limits by dynamically adjusting component operation based on actual measured noise output.

In a second aspect, a system for controlling the noise output of an electric vehicle configured to carry out the method steps of the first aspect is provided.

This system implementation allows for integrated hardware and software solutions to effectively manage vehicle noise output in various contexts.

In a third aspect, a vehicle comprising the system of the second aspect is provided.

Incorporating the noise control system directly into vehicles ensures widespread application and consistent noise management across different electric vehicle models and use cases.

### BRIEF DESCRIPTION OF FIGURES

Non-limiting and non-exhaustive examples are described with reference to the following figures.
FIG. 1 illustrates an exemplary process flow in accordance with the systems and methods described herein;
FIG. 2 illustrates an exemplary process flow for operation control in accordance with the systems and methods described herein;
FIG. 3 illustrates an exemplary process flow for operation control in accordance with the systems and methods described herein;
FIG. 4 illustrates an exemplary process flow for noise monitoring in accordance with the systems and methods described herein;
FIG. 5 illustrates an exemplary process flow for determining a noise profile in accordance with the systems and methods described herein;
FIG. 6 illustrates an example of vehicle-to-vehicle noise monitoring in accordance with the systems and method described herein; and
FIG. 7 illustrates a vehicle which incorporates the systems and methods described herein.

Common reference numerals are used throughout the figures to indicate similar features.

### DETAILED DESCRIPTION

The present disclosure relates to systems and methods for controlling noise output in electric vehicles and/or supply equipment for electric vehicles (e.g., a charger for the electric vehicle), particularly during stationary operations. Electric vehicles often require various systems to operate while the vehicle is stationary, such as battery conditioning systems, cabin climate control systems, and charging systems. These systems may include components like pumps, fans, and compressors that can generate noise. The noise generated by these components may need management in certain environments, such as residential areas or during nighttime hours.

The systems and methods described herein provide ways to control the operation of noise-generating components in electric vehicles based on various factors. These factors may include the vehicle's location, time of day, ambient temperature, desired temperature for vehicle components or compartments, and whether the vehicle is connected to charging equipment. By considering these factors, the systems and methods can adjust the operation of noise-generating components to maintain noise levels within acceptable limits while still meeting the vehicle's operational needs.

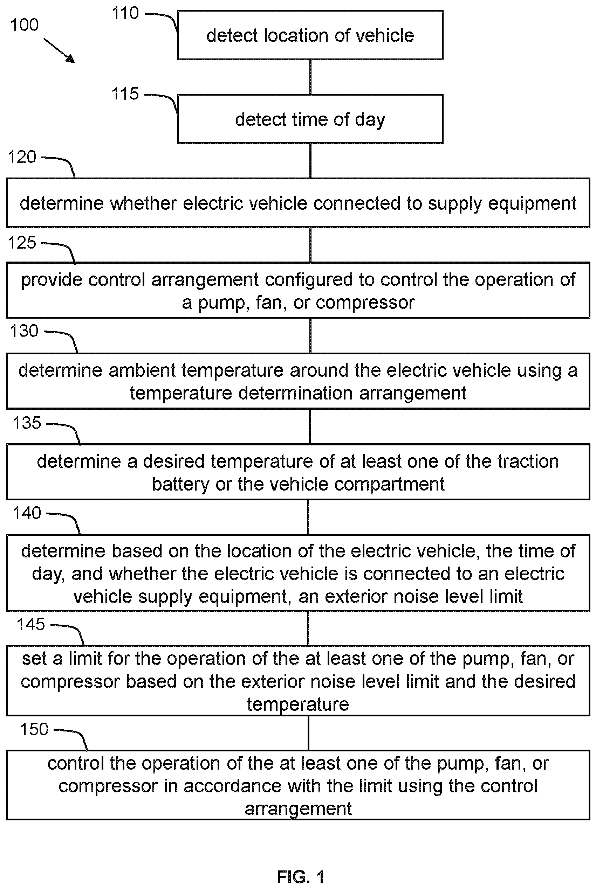

FIG. 1 illustrates a flowchart of a method 100 for controlling noise output of an electric vehicle (or of a fleet of electric vehicles).

A method 100 begins with step 110 of detecting a location of the electric vehicle using a location detection arrangement. The location detection arrangement may include a GPS sensor or other suitable positioning system.

The method 100 proceeds to step 115 of detecting a time of day. This may be accomplished using a daylight sensor to determine whether it is day or night, or by receiving an external time signal.

At step 120, the method 100 determines whether the electric vehicle is connected to an electric vehicle supply equipment. This information is used to adjust noise control parameters based on the vehicle's charging status.

The method 100 includes step 125 of providing a control arrangement configured to control the operation of at least one of a pump, a fan, or a compressor. These components are often sources of noise in electric vehicles, particularly during battery and cabin conditioning operations.

At step 130, the method 100 determines an ambient temperature around the electric vehicle using a temperature determination arrangement. This information is used to assess the need for thermal management operations.

The method 100 continues with step 135 of determining a desired temperature of at least one of the traction battery or the vehicle compartment. This desired temperature serves as a target for the thermal management system.

At step 140, the method 100 determines an exterior noise level limit based on the location of the electric vehicle, the time of day, and whether the electric vehicle is connected to an electric vehicle supply equipment. This limit takes into account factors such as local noise limits and time-of-day restrictions.

The method 100 then proceeds to step 145 of setting a limit for the operation of the at least one of the pump, fan, or compressor based on the exterior noise level limit and the desired temperature. This step balances the need for thermal management with noise control requirements.

Finally, at step 150, the method 100 controls the operation of the at least one of the pump, fan, or compressor in accordance with the limit using the control arrangement. This ensures that the vehicle maintains appropriate thermal conditions while adhering to noise restrictions.

In some examples, the method may include a step of detecting whether the electric vehicle is occupied, which may include determining whether a seat in the electric vehicle is occupied. This may be carried out by, for example, using a detector or detectors within the cabin of the electric vehicle, and/or within the seats of the electric vehicle. Such vehicle occupancy detection sensors may form part of other systems within the electric vehicle.

Such detection of seat occupancy within the electric vehicle may include detecting whether the ignition of the electric vehicle is active (e.g. in an "ignition-active" state), or whether the key for the electric vehicle is within the electric vehicle (e.g. in a "key-in-vehicle" state). The detection of seat occupancy may employ some or all of these detection methods alone or in combination.

If a determination is made that the vehicle is occupied, the step of controlling the operation of the at least one pump, fan, or compressor is cancelled. This may be for the comfort of vehicle occupants or for management of the electrical systems of the electric vehicle. As a result, step 150 of the method 100 described above is not activated if the vehicle is occupied. In an example, if the electric vehicle is occupied in stationary traffic on a warm day, limiting the noise level of the cooling systems would not be activated.

A system for controlling the noise output of an electric vehicle may be configured to carry out the method steps described above. Such a system may include various sensors, control units, and actuators to implement the noise control strategy. A vehicle may comprise this noise control system, allowing for intelligent management of noise emissions during stationary operation and charging.

The disclosed systems and methods may be implemented in electric vehicles to automatically adjust noise output based on the vehicle's environment and operational state. This can help ensure the meeting of noise limits and the vehicle's suitability for use in noise-sensitive areas or during noise-sensitive times.

The electric vehicle may include a location detection arrangement for determining the vehicle's location. In some examples, the location detection arrangement comprises a GPS sensor. The GPS sensor can provide precise geographical coordinates of the vehicle's position, which may be used to determine the type of environment in which the vehicle is located.

The location information obtained from the GPS sensor may be utilized to set appropriate noise limits for the vehicle's operation. For example, the system may identify specific locations or areas that are designated as noise-sensitive, such as residential neighbourhoods or campsites. When the vehicle is detected to be in these areas, stricter noise limits may be applied to the operation of components such as pumps, fans, or compressors.

In addition to GPS-based location detection, the electric vehicle may employ on-board image recognition capabilities to determine the type of environment in which the vehicle is situated. An image recognition system may analyse the surroundings of the vehicle using cameras or other imaging sensors. Based on this analysis, the system may classify the location as residential, a business park, a rural area, or other relevant categories. This classification can then be used to adjust noise limits accordingly.

The location detection system may also be configured to recognize and store frequently visited locations, such as the vehicle owner's home or a fleet depot. By identifying these locations, the system can automatically apply appropriate noise reduction strategies when the vehicle is parked or charging in familiar environments.

The combination of GPS-based location data and image recognition capabilities allows for a more granular approach to noise management. For instance, in a residential area identified by GPS coordinates, the image recognition system may further distinguish between densely populated neighbourhoods and more spread-out suburban areas, allowing for fine-tuned noise control strategies.

By leveraging these location detection methods, the electric vehicle can adapt its noise output to suit various environments, balancing the need for system operation with consideration for surrounding areas and potential noise limits.

The electric vehicle may employ various methods to detect the time of day, which is crucial for setting appropriate noise limits for different periods. One such method involves the use of a daylight sensor. The daylight sensor may be configured to detect ambient light levels, allowing the system to distinguish between daytime and nighttime conditions. This information can be used to automatically adjust noise limits based on whether it is day or night, potentially implementing stricter noise controls during nighttime hours when ambient noise levels are typically lower and noise disturbances may be more noticeable.

In addition to the daylight sensor, the electric vehicle may utilize a Real Time Clock (RTC) to align daytime hours with local limits. The RTC provides accurate time information, allowing the system to determine specific hours of the day. This capability enables the vehicle to adjust its noise control strategies in accordance with local time-based noise limits, which may specify different acceptable noise levels for daytime and nighttime hours.

Another method for detecting the time of day involves the use of an external time signal. The electric vehicle may be equipped with a receiver capable of obtaining time information from external sources, such as GPS satellites or cellular networks. This external time signal can provide highly accurate and location-specific time data, ensuring that the vehicle's noise control system operates based on the correct local time, even when crossing time zones or in areas where daylight conditions may not accurately reflect the time of day.

By combining these time detection methods, the electric vehicle can create a robust system for determining the appropriate time-based noise limits. For example, the system may primarily rely on the RTC and external time signals for precise time information, while using the daylight sensor as a supplementary input to account for variations in natural light conditions that may affect perceived noise levels. This multi-faceted approach to time detection allows the vehicle to adapt its noise output effectively across various times of day and in different geographical locations, ensuring the meeting of local noise limits and minimizing disturbances in noise-sensitive environments.

The electric vehicle may include a charging status detection system to determine whether the vehicle is connected to an electric vehicle supply equipment (EVSE). This detection system may utilize various methods to ascertain the charging status of the vehicle.

In some examples, the charging status detection system may include a voltage sensor connected to the vehicle's charging port. When the vehicle is plugged into an EVSE, the voltage sensor may detect the presence of voltage at the charging port, indicating that the vehicle is connected to a charging station.

Additionally or alternatively, the charging status detection system may incorporate a current sensor to measure the flow of electrical current from the EVSE to the vehicle's battery. The presence of current flow can confirm that the vehicle is not only connected but actively charging.

The charging status information obtained by these sensors may be used to modify the exterior noise level limits and operational decisions of the vehicle's noise-generating components. When the electric vehicle is determined to be connected to an EVSE, the system may set the exterior noise level limit irrespective of the vehicle's location and the time of day. This approach recognizes that vehicles in charging locations may have different noise allowances compared to those in other stationary situations.

In some examples, the exterior noise level limit may be modified when the vehicle is connected to an EVSE. This modification may allow for higher noise levels during charging operations, as charging locations are often designed to accommodate the operational needs of electric vehicles.

The charging status detection system may also be capable of distinguishing between different types of charging, such as alternating current (AC) charging and direct current (DC) fast charging. This distinction can be made by analysing the charging current characteristics. For DC fast charging, which typically involves higher current levels, the system may allow for higher noise radiation during these short-duration charging sessions. This allowance recognizes the temporary nature of fast charging and the potential need for increased cooling system operation to manage battery temperatures during rapid charging.

By incorporating charging status detection into the noise control system, the electric vehicle can adapt its noise output strategy based on its charging state, balancing the need for efficient charging operations with appropriate noise management in various environments.

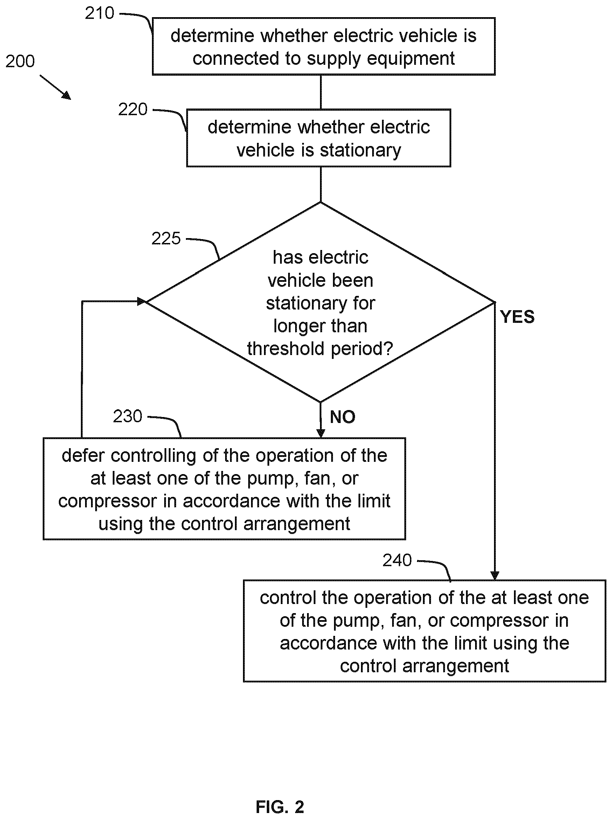

The method 200 for controlling operations in an electric vehicle based on its stationary status and connection to supply equipment is illustrated in FIG. 2. Step 210 of the method 200 involves determining whether the electric vehicle is connected to an electric vehicle supply equipment. This determination is crucial for adjusting the noise control parameters based on the vehicle's charging status.

Following the determination of the vehicle's connection status, step 220 of the method 200 involves determining whether the electric vehicle is stationary. This step is important for assessing the need for noise control measures, as stationary vehicles may be subject to different noise limits as compared to moving vehicles.

A decision step 225 of the method 200 evaluates whether the electric vehicle has been stationary for longer than a threshold period. This threshold period may be set based on local limits or operational considerations. If the electric vehicle has been stationary for a time period lower than the threshold period, step 230 of the method 200 involves deferring the step of controlling the operation of at least one of the pump, fan, or compressor in accordance with the limit using the control arrangement. This deferral allows for short-term operations without triggering noise control measures.

In some examples, the method 200 may include running systems on high for a short duration, such as 9.5 minutes, before ramping down to comply with noise limits. This approach may allow for efficient thermal management or battery conditioning while still adhering to noise limits over longer periods.

If the decision step 225 determines that the electric vehicle has been stationary for longer than the threshold period, step 240 of the method 200 involves controlling the operation of at least one of the pump, fan, or compressor in accordance with the limit using the control arrangement. This step ensures that noise control measures are implemented for extended stationary periods.

The method 200 may also include modifying the exterior noise level limit based on whether the electric vehicle is connected to an electric vehicle supply equipment. When the electric vehicle is connected to supply equipment, the exterior noise level limit may be adjusted to account for the charging process and associated thermal management requirements.

In some examples, when the electric vehicle is connected to an electric vehicle supply equipment, the method 200 may involve determining the exterior noise level limit irrespective of the location of the electric vehicle and the time of day. This approach recognizes that charging operations may have different noise considerations compared to non-charging stationary periods.

By implementing these steps, the method 200 provides a comprehensive approach to controlling noise output in electric vehicles, taking into account various operational states and environmental factors.

The electric vehicle includes a temperature determination arrangement for measuring the ambient temperature around the vehicle. This temperature determination arrangement may comprise one or more temperature sensors positioned at various locations on the exterior of the vehicle. These sensors can provide accurate readings of the surrounding air temperature, which is an important factor in determining the operational needs of the vehicle's climate control and battery management systems.

**In** addition to measuring ambient temperature, the electric vehicle includes a system for determining desired temperatures for the traction battery and vehicle compartment. This system may take into account factors such as user preferences, optimal operating conditions for the battery, and energy efficiency considerations. For the traction battery, the desired temperature may be based on factors such as the battery's chemistry, state of charge, and upcoming driving conditions. For the vehicle compartment, the desired temperature may be set by the user or determined based on pre-programmed comfort settings.

The ambient temperature and desired temperatures for the traction battery and vehicle compartment play a crucial role in influencing noise control decisions. When there is a significant difference between the ambient temperature and the desired temperatures, the climate control and battery management systems may need to work harder to achieve and maintain the desired temperatures. This increased workload can result in higher noise levels from components such as pumps, fans, and compressors.

To manage this potential increase in noise while still meeting temperature requirements, the electric vehicle may employ various strategies. For example, the vehicle may be configured to run its climate control and battery management systems at a higher power setting for a short duration, such as 9.5 minutes, before ramping down to comply with noise limits. This approach may allow for rapid initial temperature adjustment while ensuring long-term meeting of noise limits.

The electric vehicle may also be designed to integrate with smart home or building systems to aid in temperature and noise control. For instance, when the vehicle is parked in a connected garage, it may communicate with the building's systems to control the environment. This could involve closing garage doors or adjusting blinds to help maintain a more stable temperature around the vehicle, potentially reducing the workload on the vehicle's climate control systems and, consequently, lowering noise output.

In some examples, the electric vehicle may be an autonomous vehicle capable of making decisions about its positioning to optimize temperature management and noise control. The autonomous vehicle may analyse its surroundings and environmental factors to determine if moving to a different location could help reduce noise output. For instance, if the vehicle detects that it is parked in direct sunlight and this is causing increased cooling system activity and noise, it may move itself to a shaded area if available. Similarly, if the vehicle determines that its current location is subject to stricter noise limits, it may relocate to an area with more lenient noise limits, provided such movement is permissible and/or appropriate.

By considering ambient temperature, desired temperatures for critical components, and leveraging various temperature management strategies, the electric vehicle can balance the need for effective climate control and battery management with the requirement to minimize noise output. This approach allows for adaptive noise control that responds to both environmental conditions and the vehicle's operational needs.

The electric vehicle may employ various methods to determine and adjust exterior noise level limits based on location, time, and charging status. These methods may allow the vehicle to adapt its noise output to different environments and scenarios.

In some examples, the exterior noise level limit may be set manually by a user. This allows for customization based on personal preferences or specific local requirements. The user may input desired noise limits through a user interface, which may be part of the vehicle's infotainment system or a dedicated control panel.

The electric vehicle may include a data reception arrangement configured to receive instructions for setting the exterior noise level limit. This arrangement may allow for remote updates or adjustments to noise limits based on changing rules or environmental factors. For instance, a central server may send updated noise limit instructions to multiple vehicles in a specific area to meet new local ordinances.

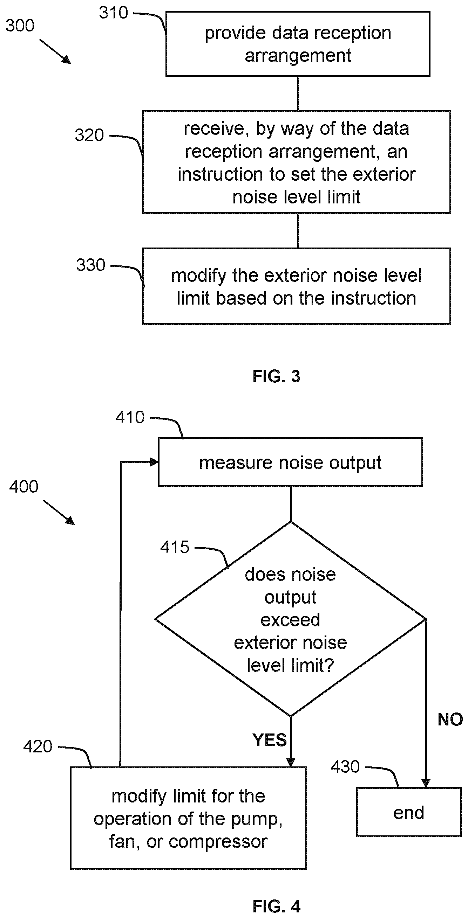

The method 300 for setting noise limits through data reception is illustrated in FIG. 3. Step 310 of the method 300 involves providing a data reception arrangement. This data reception arrangement may be configured to receive instructions or updates related to noise control parameters.

Step 320 of the method 300 involves receiving, by way of the data reception arrangement, an instruction to set the exterior noise level limit. This instruction may come from various sources, such as a user input, a remote server, or an over-the-air (OTA) update system.

Following the reception of the instruction, step 330 of the method 300 involves modifying the exterior noise level limit based on the instruction. This modification allows for dynamic adjustment of noise control parameters based on updated information or user preferences.

In some examples, the exterior noise level limit may be set manually by a user. This manual setting option provides flexibility for users to adjust noise control parameters based on their specific needs or local rules.

The system may consider various factors when determining appropriate noise limits. For example, in a residential area during nighttime hours, the noise limit may be set lower compared to a commercial area during daytime hours. When the vehicle is connected to an electric vehicle supply equipment, the noise limit may be adjusted to allow for necessary cooling operations during charging.

Vehicle-to-vehicle (V2V) communication may be utilized to report noise levels between vehicles. In an example, a first vehicle may be configured to communicate with a second vehicle as the first vehicle passes the second vehicle. The first vehicle may report to the second vehicle the noise level detected from the second vehicle. This information can be used by the second vehicle to adjust its operations if necessary to remain within noise limits.

The electric vehicle may include a noise measurement system to monitor its own noise output. This system may continuously or periodically measure the noise generated by the vehicle's components, such as pumps, fans, and compressors. If the measured noise output exceeds the determined exterior noise level limit, the system may modify the operational limits of these components to reduce noise output. For example, the system may reduce the maximum speed of a cooling fan or adjust the operation cycle of a compressor to bring the noise level back within acceptable limits.

The method 400 for monitoring noise output and adjusting control parameters is illustrated in FIG. 4. Step 410 of the method 400 involves measuring the noise output of the electric vehicle. This measurement may be performed using sound level sensors or other appropriate noise detection devices.

A decision step 415 of the method 400 determines whether the noise output of the electric vehicle exceeds the exterior noise level limit. This comparison ensures that the vehicle's noise emissions remain within acceptable limits.

If the decision step 415 determines that the noise output exceeds the limit, step 420 of the method 400 involves modifying the limit for the operation of the at least one of the pump, fan, or compressor. This modification may involve adjusting the speed or power of these components to reduce noise output.

The control arrangement may comprise at least one actuator configured to control the operation of the at least one pump, fan, or compressor. These actuators allow for precise adjustment of component operation to maintain noise levels within specified limits.

Controlling the operation of the at least one pump, fan, or compressor may comprise controlling the speed thereof. By adjusting the speed of these components, the control arrangement can effectively manage noise output while maintaining necessary thermal management functions.

The methods 300 and 400 work together to provide a comprehensive approach to noise control in electric vehicles. The method 300 allows for dynamic setting and updating of noise limits, while the method 400 ensures continuous monitoring and adjustment of vehicle operations to maintain the meeting of such limits. This combined approach enables electric vehicles to operate efficiently while minimizing noise pollution in various environments.

In scenarios where multiple electric vehicles are parked in close proximity, such as in a depot or parking facility, the overall noise level of the collection of vehicles may be considered. Each vehicle may communicate its current noise output and operational status to a central management system. This system can then coordinate the operations of all vehicles to ensure that the cumulative noise level remains within acceptable limits. For instance, the system may stagger the timing of high-noise operations across different vehicles to prevent simultaneous peak noise levels.

The noise level determination system may also take into account temporary exceptions to standard noise limits. For example, during a brief period immediately after parking, such as the first ten minutes, the vehicle may be allowed to operate at higher noise levels to perform necessary cooling or heating operations. After this initial period, the system would then adjust operations to comply with the standard noise limits for stationary vehicles.

By employing these various methods and considerations, the electric vehicle can dynamically adjust its noise output to suit different environments and operational needs while maintaining agreement with noise limits and minimizing disturbances in noise-sensitive areas.

The electric vehicle includes a control arrangement for managing the operation of pumps, fans, and compressors. This control arrangement is designed to control the noise output of these components while maintaining the desired temperatures for the vehicle's systems.

The control arrangement may include one or more actuators configured to control the operation of the pumps, fans, and compressors. These actuators can adjust various operational parameters of the components, with a primary focus on controlling their speed. By modulating the speed of these components, the control arrangement can effectively manage both their performance and noise output.

In operation, the control arrangement receives inputs regarding the current exterior noise level limit and the desired temperatures for various vehicle systems, such as the traction battery and vehicle compartment. Based on these inputs, the control arrangement determines appropriate speed limits for the pumps, fans, and compressors.

The relationship between component speed and noise output may be characterized through testing and analysis. For example, at a given noise level limit, there may be corresponding maximum speed limits for each component. These relationships can be stored in the control arrangement as lookup tables or mathematical models.

When a specific noise level limit is set, the control arrangement may consult these stored relationships to determine the maximum allowable speeds for each component. For instance, if a lower noise level limit is required due to the vehicle's location or the time of day, the control arrangement may set lower maximum speeds for the pumps, fans, and compressors.

The control arrangement may also consider the desired temperatures when setting speed limits. If there is a significant difference between the current temperature and the desired temperature, the control arrangement may allow higher component speeds within the constraints of the noise level limit to achieve the desired temperature more quickly.

In some examples, the control arrangement may implement variable speed control strategies. Rather than simply setting a fixed maximum speed, the control arrangement may dynamically adjust the speeds of pumps, fans, and compressors based on real-time conditions. This approach allows for more precise control of both noise output and temperature management.

The control arrangement may also incorporate feedback mechanisms to ensure the meeting of noise limits. If the vehicle is equipped with noise sensors, the control arrangement may continuously monitor the actual noise output and make real-time adjustments to component speeds if the measured noise approaches or exceeds the set limit.

By utilizing this control arrangement, the electric vehicle can effectively manage the operation of its pumps, fans, and compressors to maintain desired temperatures while adhering to specified noise level limits. This approach allows for flexible and adaptive noise control across various operating conditions and environments.

The electric vehicle may be configured with various operational modes designed to control noise output while maintaining necessary functionality. These operational modes, referred to as "quiet modes," are tailored to different scenarios based on factors such as time of day and whether the vehicle is connected to a charging station.

In some examples, the electric vehicle may implement a "Daytime Quiet on plug" mode. This mode may be activated when the vehicle is connected to a charging station during daytime hours. In this mode, the noise output limits may be set to a level that balances the need for efficient charging and temperature management with consideration for daytime noise limits in the surrounding area.

Another operational mode may be a "Nighttime Quiet on plug" mode. This mode may be activated when the vehicle is charging during nighttime hours. In this mode, stricter noise output limits may be applied to minimize disturbances in residential areas or other noise-sensitive locations during typically quieter nighttime periods.

The electric vehicle may also implement a "Daytime Quiet off plug" mode. This mode may be used when the vehicle is parked but not connected to a charging station during daytime hours. In this mode, the noise output limits may be adjusted to allow for necessary battery and cabin temperature management while adhering to daytime noise limits.

A "Nighttime Quiet off plug" mode may be implemented for scenarios where the vehicle is parked but not charging during nighttime hours. This mode may impose the strictest noise output limits to minimize potential disturbances during nighttime hours when ambient noise levels are typically lower.

The selection and implementation of these quiet modes may be based on various inputs and sensors. For example, the vehicle may use its time detection system to determine whether it is day or night, and its charging status detection system to determine if the vehicle is connected to a charging station. The location detection system may also play a role in determining which quiet mode to activate based on the vehicle's current environment.

In some examples, the quiet modes may be driver-selectable via a menu option in the vehicle's user interface. This feature may allow drivers to manually select a preferred quiet mode based on their specific circumstances or preferences. For instance, a driver may choose to activate a stricter quiet mode even during daytime hours if they are parked in a particularly noise-sensitive area.

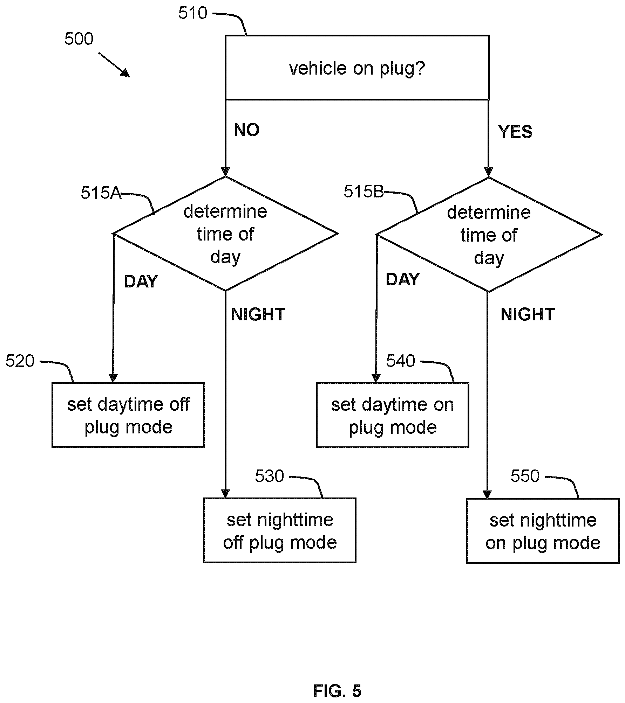

The method 500 for controlling noise output of an electric vehicle based on vehicle status and time of day is illustrated in FIG. 5. Step 510 of the method 500 involves determining whether a vehicle is connected to an electric vehicle supply equipment (on plug). This determination is crucial for selecting the appropriate noise control mode.

Following the determination at step 510, the method 500 branches into two parallel paths. If the vehicle is not connected to the supply equipment (NO branch), the method 500 proceeds to step 515A to determine the time of day. If the vehicle is connected (YES branch), the method 500 proceeds to step 515B to determine the time of day.

The time of day determination may be accomplished using various means. In some examples, a daylight sensor may be used to detect whether it is day or night. Alternatively, an external time signal may be used to determine the precise time of day.

For the NO branch, when it is determined to be daytime, the method 500 proceeds to step 520 to set a daytime off plug mode. When it is determined to be nighttime, the method 500 proceeds to step 530 to set a nighttime off plug mode.

For the YES branch, when it is determined to be daytime, the method 500 proceeds to step 540 to set a daytime on plug mode. When it is determined to be nighttime, the method 500 proceeds to step 550 to set a nighttime on plug mode.

These operational modes, referred to as 'exterior quiet modes', are defined to control noise output based on the vehicle's connection status and time of day. The modes include 'Daytime Quiet on plug', 'Nighttime Quiet on plug', 'Daytime Quiet off plug', and 'Nighttime Quiet off plug'.

In some examples, the method 500 may include detecting charging current to allow higher noise radiation during short duration DC Fast charging. This feature recognizes that brief periods of increased noise may be acceptable during rapid charging sessions.

The location of the vehicle may be determined using a location detection arrangement, which may include a GPS sensor. This location information can be used in conjunction with the time of day and connection status to further refine the noise control strategy.

In some examples, a driver may be allowed to select quiet modes via a menu option. This feature provides flexibility for users to manually adjust noise control settings based on their preferences or specific environmental conditions.

By implementing these different operational modes, the method 500 provides a comprehensive approach to controlling noise output in electric vehicles, taking into account various factors such as charging status, time of day, and user preferences.

The implementation of these quiet modes may involve adjusting various parameters of the vehicle's noise-generating components. For example, in a stricter quiet mode, the maximum speeds of pumps, fans, and compressors may be set to lower levels compared to less restrictive modes. The control arrangement may dynamically adjust these parameters to maintain the desired noise levels while still meeting the vehicle's operational needs.

By offering these various quiet modes, the electric vehicle can adapt its noise output to different scenarios, balancing the need for efficient operation with consideration for the surrounding environment and applicable noise limits.

The electric vehicle's noise control system integrates various components and sensors to manage noise output effectively while maintaining necessary vehicle functions. This integrated system operates dynamically, adapting to different scenarios and environmental conditions.

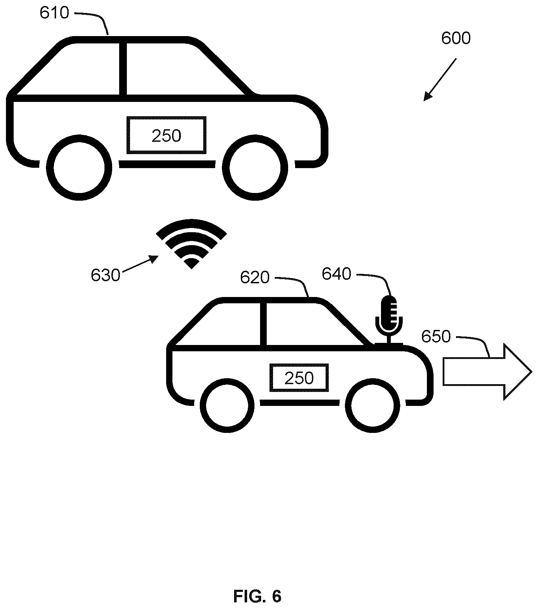

The vehicle system 600 illustrated in FIG. 6 demonstrates a vehicle-to-vehicle communication system for noise monitoring. A first vehicle 610 and a second vehicle 620 are shown, each containing a battery pack of vehicle 250. A wireless communication link 630 is established between the first vehicle 610 and the second vehicle 620, enabling data exchange between the vehicles.

The second vehicle 620 is equipped with a sound level sensor 640 for detecting and measuring noise levels. A direction indicator 650 is shown extending from the second vehicle 620, which can indicate the direction of movement or orientation of the vehicle.

The vehicle system 600 allows for vehicle-to-vehicle (V2V) communication to report noise levels between vehicles. For example, the second vehicle 620 may use the sound level sensor 640 to measure the noise level of the first vehicle 610 as the first vehicle 610 passes by. The second vehicle 620 may then transmit this noise level information to the first vehicle 610 via the wireless communication link 630.

In some examples, the vehicle system 600 may consider noise from external sources such as charging station fans. The sound level sensor 640 may be configured to detect and measure noise from these external sources, allowing the vehicles to adjust their own noise output accordingly.

The vehicle system 600 may be used to control overall noise levels for multiple vehicles in a depot, parking facility, or storage facility. Each vehicle in the facility may be equipped with a sound level sensor 640 and wireless communication capabilities. The vehicles may communicate with each other to coordinate their noise output, ensuring that the combined noise level of all vehicles remains within acceptable limits.

For instance, if the first vehicle 610 detects that the noise level in the facility is approaching a predetermined limit, the first vehicle 610 may communicate with the second vehicle 620 and other nearby vehicles to reduce their noise output. This coordinated approach allows for efficient management of noise levels in shared spaces.

Arrow 650 indicates the direction of travel of the second vehicle.

When the electric vehicle is not connected to an electric vehicle supply equipment, the system determines the duration for which the vehicle has been stationary. This determination may be made using a combination of sensors, such as motion sensors or GPS data. The system may defer control of the pump, fan, or compressor until a threshold time period has elapsed. For example, if the threshold period is set to ten minutes, the system may allow normal operation of these components for the first nine and a half minutes after the vehicle becomes stationary. This approach allows for necessary temperature management or other functions to be performed at full capacity for a short duration before implementing noise control measures.

In various scenarios, the integrated system adapts its operation to balance noise control with vehicle needs. For instance, when the electric vehicle is charging in a residential area at night, the system may activate a nighttime quiet mode. In this mode, the system may set lower speed limits for the pump, fan, and compressor to minimize noise disturbance. However, the system continues to monitor the battery temperature and charging status, adjusting component operation as needed within the constraints of the noise limits.

On a hot day, when the electric vehicle is parked and not charging, the system may need to manage battery temperature to prevent overheating. In this scenario, the system may initially operate the cooling components at higher speeds for a short duration, taking advantage of the threshold period before stricter noise controls are implemented. After this initial period, the system may adjust to a more moderate cooling strategy that balances temperature management with noise reduction.

The electric vehicle's noise control system may be updated and refined over time using Over The Air (OTA) flash capability. This feature allows for remote updates to the system's parameters, algorithms, and operational modes. For example, if new rules regarding noise limits are implemented in certain areas, the vehicle manufacturer may push an OTA update to adjust the noise control parameters for vehicles in those locations. This capability ensures that the noise control system remains up-to-date with evolving rules and can be optimized based on real-world performance data.

The OTA update capability may also be used to introduce new operational modes or refine existing ones. For instance, if data analysis reveals that certain component speed profiles are more effective at managing noise while maintaining performance, these profiles can be distributed to vehicles via OTA updates. This continuous update process may allow the noise control system to become more sophisticated and efficient over time.

By integrating these various elements and capabilities, the electric vehicle's noise control system can effectively manage noise output across a wide range of scenarios while maintaining essential vehicle functions and adapting to evolving requirements and environmental conditions.

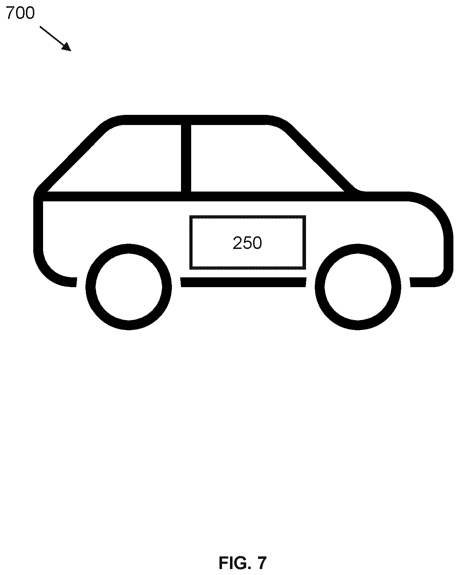

FIG. 7 illustrates a side orthogonal view of a vehicle 700. The vehicle 700 includes a battery pack of vehicle 250, which is positioned along the lower portion of the vehicle's body.

The positioning of the battery pack of vehicle 250 in the lower section of the vehicle 700 allows for efficient use of space and contributes to the vehicle's stability.

The vehicle 700 may be equipped with a GPS sensor to detect 'home' locations or known 'noise sensitive' areas such as campsites. This feature allows the vehicle 700 to adjust noise control parameters based on its location, ensuring the meeting of local noise limits.

In some examples, the vehicle 700 may be integrated with smart home or building systems. This integration allows for control of environmental factors affecting vehicle temperature and noise. For instance, the smart home system may trigger the closing or opening of a garage door to aid in controlling the temperature of the vehicle 700, potentially reducing the need for noisy cooling systems.

The vehicle 700 may include an on-board image recognition system. This system can be used to determine if the vehicle 700 is in a residential, built-up, business park, non-residential, rural, or remote area. By recognizing the surrounding environment, the vehicle 700 can adjust noise control strategies accordingly.

In some examples, the vehicle 700 may be an autonomous vehicle. The autonomous capabilities of the vehicle 700 may be used to reduce noise levels by changing parking location. For instance, if the vehicle 700 detects that noise levels could be reduced by moving to a more shaded area, the vehicle 700 may autonomously reposition itself to optimize noise control and energy efficiency.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A method for controlling the noise output of an electric vehicle, the method comprising:
detecting, using a location detection arrangement, a location of the electric vehicle;
detecting a time of day;
determining whether the electric vehicle is connected to an electric vehicle supply equipment;
providing a control arrangement configured to control the operation of at least one of a pump, a fan, or a compressor;
determining, using a temperature determination arrangement, an ambient temperature around the electric vehicle;
determining a desired temperature of at least one of the traction battery or the vehicle compartment;
determining, based on the location of the electric vehicle, the time of day, and whether the electric vehicle is connected to an electric vehicle supply equipment, an exterior noise level limit;
setting, based on the exterior noise level limit and the desired temperature, a limit for the operation of the at least one of the pump, fan, or compressor; and
controlling, using the control arrangement, the operation of the at least one of the pump, fan, or compressor in accordance with the limit.

2. The method of claim 1, wherein the location detection arrangement is a GPS sensor.

3. The method of claim 1 or claim 2, wherein the step of detecting the time of day comprises detecting, using a daylight sensor, whether it is day or night.

4. The method of claim 1 or claim 2, wherein the step of detecting the time of day comprises detecting the time of day by using an external time signal.

5. The method of any preceding claim, wherein on detecting that the electric vehicle is not connected to an electric vehicle supply equipment, determining a duration for which the vehicle has been stationary.

6. The method of claim 5, wherein, on determining that the vehicle has been stationary for a time period lower than a threshold period, deferring the step of controlling, using the control arrangement, the operation of the at least one of the pump, fan, or compressor in accordance with the limit, until the threshold time period has elapsed.

7. The method of any preceding claim, wherein on determining that the electric vehicle is connected to an electric vehicle supply equipment, modifying the exterior noise level limit.

8. The method of any one of claims 1-6, wherein on determining that the electric vehicle is connected to an electric vehicle supply equipment, determining the exterior noise level limit irrespective of the location of the electric vehicle and the time of day.

9. The method of any preceding claim, wherein the exterior noise level limit is set manually by a user.

10. The method of any preceding claim, wherein controlling the operation of the at least one pump, fan, or compressor comprises controlling the speed thereof.

11. The method of any preceding claim, further comprising:
providing a data reception arrangement;
receiving, by way of the data reception arrangement, an instruction to set the exterior noise level limit; and
modifying the exterior noise level limit based on the instruction.

12. The method of any preceding claim, wherein providing the providing control arrangement comprises providing at least one actuator configured to control the operation of the at least one pump, fan, or compressor.

13. The method of any preceding claim further comprising:
measuring the noise output of the electric vehicle;
determining whether the noise output of the electric vehicle exceeds the exterior noise level limit; and
modifying the limit for the operation of the at least one of the pump, fan, or compressor.

14. A system for controlling the noise output of an electric vehicle configured to carry out the method steps of any one of claims 1-13.

15. A vehicle comprising the system of claim 14.
